Europäisches Patentamt

European Patent Office

Office européen des brevets

(11) Publication number: **0 424 325 A1**

## EUROPEAN PATENT APPLICATION

(21) Application number: **90830417.3**

(22) Date of filing: **24.09.90**

(51) Int. Cl.⁵: **A22C 17/00, B65G 47/90**

(30) Priority: **19.10.89 IT 4015689**

(43) Date of publication of application:
**24.04.91 Bulletin 91/17**

(84) Designated Contracting States:
**AT BE CH DE ES FR GB LI NL SE**

(71) Applicant: **TECNOMEC S.r.L.**
**Via dell'Industria, 346**
**I-41058 Vignola (Modena)(IT)**

(72) Inventor: **Venturelli, Rino**
**Via Volturno, 90**
**I-41056 Savignano Sul Panaro (Modena)(IT)**

(74) Representative: **Lanzoni, Luciano**
**c/o BUGNION S.p.A. Viale Trento Trieste, 25**
**I-41100 Modena(IT)**

(54) **Equipment for the lifting and transferring of objects, in particular of presses for hams.**

(57) The present invention relates to equipment for the lifting and transferring of objects, in particular of presses for hams.

It is constituted of a plurality of gripping organs (20), arranged consecutively side-by-side, each of which is capable of gripping one press (1). The individual press (1) is squeezed against a "V" support (13) by the action of two mushroom-shaped gripping elements (11), arranged at the free extremity of two parallel rods (10), slidable axially.

Fig.2

Object of the present invention is equipment for the lifting and transferring of objects, in particular of presses for hams.

In the processing cycle for cooked hams presses are used for pressing single hams. These presses essentially comprise special metal recipients quipped with a weight-bearing bottom, an ample upper space to contain the ham, and a special pressing cover, insertable into the press through the upper space, and supported by means of strong springs to an external frame which can be fixed to the recipient in various positions. The fixing of the external frame to the recipient is realised by means of toothed rods which interact with corresponding elements arranged on the external lip of the recipient. After the pressing operation the external frame remains anchored to the recipient in the position reached during pressing, so that the ham remains compressed by the cover, in turn held in position by the action of the springs by which it is fixed to the external frame.

In present practice the handling of the presses for the execution of the various operations and in particular for the pressing is done manually. The presses are taken singly from the containers where they are stacked, are arranged under the press and subsequently taken from the press back to the container once the pressing operation is completed.

Considering the notable weight involved, this operation is rather strenuous for the operator.

On the other hand, the use of instruments or equipment for the lifting of the presses is particularly problematic because of the characteristics of the presses themselves. They cannot be manipulated and transported by means of the usual systems utilised for other objects except by causing serious complications which inevitably would end up by complicating and slowing down the entire work-cycle. For example, the presses cannot be conveyed from the containers to the presses and vice-versa by means of the usual belt transport systems: nor can they be transferred using lifting systems which involve a vertical-direction manoeuvring space that is too high in relation to the total height of the press. Even the lateral gripping of the presses by means of pliers is problematic both because of the conformation characteristics of the presses and because of the necessity for such an operation of having sufficient space between any two stacked presses in the container.

The present invention, as characterised in the claims which follow, obviates in a simple nad functional way the lacks and drawbacks in the present art.

One of the advantages of the present invention is that of enabling the operation on more than one press at a time, indeed on a number of presses contemporaneously, arranged side-by-side.

Further characteristics of the invention will be better described in the detailed description which follows, of a preferred but not exclusive form of the invention, here illustrated in the form of a non-limiting example in the attached illustrations where:

- Figure 1 represents a schematic view from above;

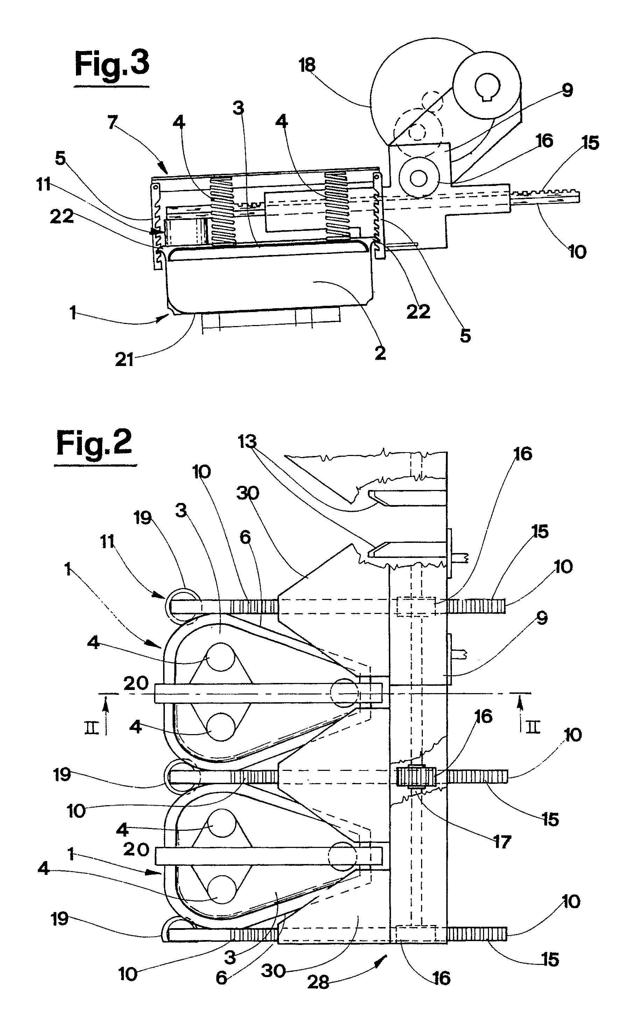

- Figure 2 shows, in enlarged scale, a detail of Figure 1;
- Figure 3 shows a schematic section along plane II-II of Figure 2;
- Figure 4 represents, in enlarged scale, a detail of Figure 3.

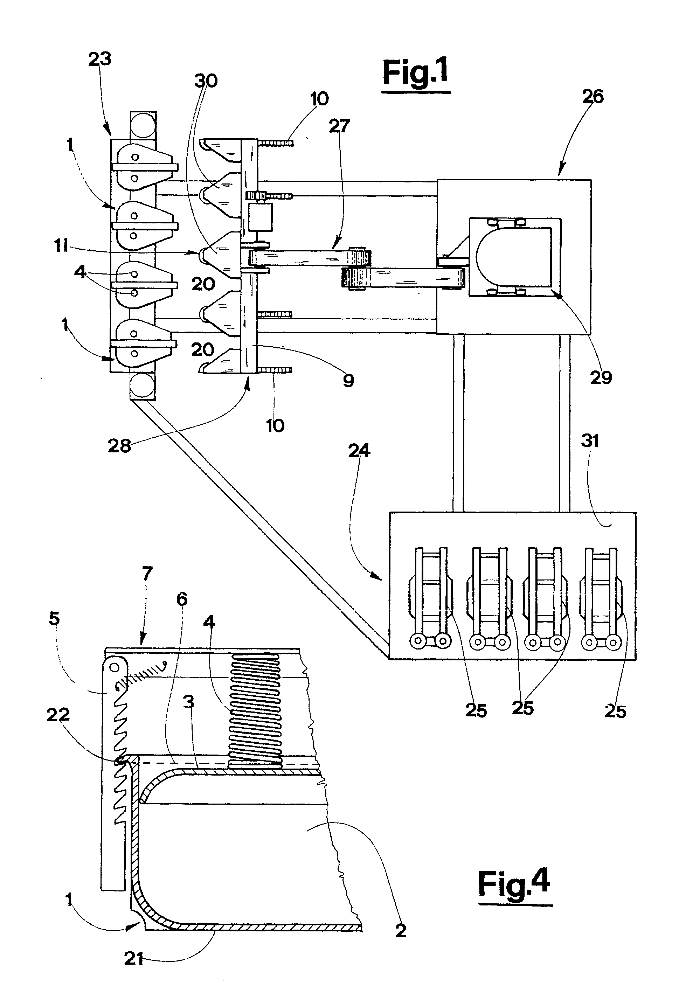

In the attached illustrations, fig.1 shows a press for hams, comprising a recipient 2, equipped at its base with a bottom 21 and at its top with a cover 3 which is supported, by means of strong springs 4, to an external frame 7. The external frame 7 is in its turn equipped with two toothed rods 5 hinged to the opposite ends of the external frame 7 with the function of interacting with toothed elements 22 arranged at the two opposite ends of the overhanging lip 6 situated around the edge of the top of the recipient 2. By means of the toothed rods 5 the frame 7 can be anchored at various heights to the recipient 2. In this way the cover 3 can be pushed by the springs 4 against the ham positioned in the recipient 2, and the ham can therefore be maintained under pressure for an indefinite period of time. The presses 1 are arranged side-by-side in lines in multi-level containers 23 located in proximity to a pressing station 24 having as many pressing units 25 activatable independently from each other as there are presses 1 stored on each level of the multi-level containers 23. The transfer of the presses 1 from the multi-level containers 23 to the pressing station 24 and viceversa is effected by a robot, indicated in the figure by number 26, which is equipped with a multi-segment arm 27 at whose free extremity a gripping group 28 is attached. The multi-segment arm 27 is attached to a column 29 which is rotatable around a vertical axis along which it slides vertically.

The gripping group 28 comprises four gripping organs 20 each able to grip one press 1. All the gripping organs 20 are arranged side-by-side on a single frame 9. Each gripping organ 20, considered singly, comprises two parallel rods 10 lying practically horizontally and fixed to the frame 9 so that they are axially slidable in both directions. Each of the two parallel rods 10 has on its upper surface a rack 15 which meshes with a cogged pinion 16 rotatably solid to a shaft 17 in its turn commanded by means of a motor group 18 supported on the frame 9. The cogged pinions 16, which mesh with the racks 15 of the parallel rods 10, are rotatably solid to the same shaft 17 activated by the motor group 18. Each parallel rod 10 has at its free end a gripping element 11 arranged in a vertically downwards direction and having a mushroom-shaped configuration due to the presence of a laterally jutting appendage 19. This laterally jutting appendage 19 is predisposed to interact with the lower surface of the overhanging lip 6 on each recipient 2 of each press 1. With the exception of the two parallel rods 10 situated at the opposite ends of the gripping group 28, all the remaining parallel rods 10 are shared between two consecutive gripping organs 20. The gripping elements 11 present an exactly symmetrical form with respect to the vertical median plane of the parallel rods 10 to which they are respectively fixed. Thus each gripping element 11 is able to act, by using its opposite sides, on two presses 1 located in correspondence with two contiguous gripping organs 20. The distance between two gripping elements 11 belonging to a gripping organ 20 is correlated with the width of the recipients 2, so that it can be made inferior to said width.

A "V" support 13 is fixed to the frame 9 in median position between the two parallel rods 10 of a gripping organ 20: said "V" support 13 contacts the lower surface of the overhanging lip 6 of a recipient 2 at the opposite end to the part of the same overhanging lip 6 operated on by the laterally jutting appendages 19 of the gripping elements 11. Thus each press 1 is gripped by the gripping organs 20 by the action of the gripping elements 11, which are brought in to squeeze, as in a vice, the press 1 against the "V" support 13. Each gripping organ 20 is further equipped with two guides 30, mounted on top of the frame 9 at the height of the parallel rods 10 and predisposed to interact with the external frame 7 of the cover 3 and in particular with the toothed rods 5 anchored to the underlying recipient 2 to produce, before the blocking of the gripping operation, the correct positioning of the presses 1 with respect to the vertical median plane of symmetry for each gripping organ 20. This permits of precisely positioning and orienting each press 1 in its relative gripping organ 20 and thus of presenting the said press 1 in the correct position for the pressing operation.

The gripping of four presses 1 arranged on one level of the multi-level container 23 is executed simultaneously by the gripping group 28. Said gripping group 28 is brought to the line of presses 1 and inserted between them in such a way that for each single gripping organ 20 both the laterally jutting appendage 19 and the "V" support 13 come into position beneath the overhanging lip 6 of the press 1, at a sufficient distance from it. In order to attain this distancing it is necessary to extend the parallel rods 10 appropriately.

The gripping operation is executed simply by drawing in the parallel rods 10 so that the gripping elements 11 of each gripping organ 20 squeeze the relative press 1 against the respective "V" support 13. The interaction between the laterally jutting appendage 19 and the lower surface of the overhanging lip 6 of the recipient 2 of each press 1 means that the press 1 can be firmly gripped as well as perfectly positioned with respect to the said gripping organ 20.

The described gripping system can only be operated in the presence of a quite small vertical area left free ian the proximity of the overhanging lip 6 of each press 1. This free area is also for the manoeuvring necessary to the pressing action on the external frame 7. The line of presses 1 gripped in the receipient 2 is then transferred, by means of the movement of the multi-segment arm 27, to the pressing station 24 where the pressing units 25 are situated. The positioning of the presses 1 under the respective pressing units 25 is executed by the simple sliding of the entire gripping group 28 in a parallel direction to the parallel rods 10. When the correct position is reached (indicated by sensors not represented in the illustrations), the pressing units 25 act independently from each other on the frames 7 of the single presses 1 which are kept perfectly centred and in position by the relative gripping organs 20. The pressing force exerted by the single pressing units 25 is concentrated on the flatcar 31 at the pressing station 24 on which the presses 1 stand on their bottoms 21.

Once the pressing action is effected the entire gripping group 28 is borne away from the pressing station 24 and is transported to the level of the multi-level container 23 where the presses 1 are to be unloaded by a manoeuvre identical in reverse to the gripping operation. When the gripping elements 11 are far enough away from the corresponding "V" supports 13, the entire gripping group 28 can be lifted and moved to another level of the multi-level containers 23, ready for a new gripping and transferring cycle.

The invention permits of operating with speed and precision. Furthermore it is not linked only to one particular type of press, but is capable, thanks to its structure, of accepting almost every type of conformation as long as such conformation is kept within a field of dimensions compatible with the distance between the gripping elements 11 of a single gripping organ 20.

**Claims**

1) Equipment for the lifting and transferring of presses for hams, comprising special recipients (2) each equipped with a pressing cover (3) supported by means of strong springs to an external frame (7) which is in its turn equipped with at least two toothed rods 5 which interact with corresponding toothed elements (22) arranged on the external lip (6) situated at the opening of each single recipient (2), having at least one gripping organ (20) comprising:

- a frame (9);
- at least two parallel rods (10) lying almost horizontally or horizontally, commanded to slide simultaneously in the two axial directions; each said parallel rod (10) having at its free end a gripping element (11) arranged in a vertically downwards direction and having at its bottom end at least one laterally jutting appendage (19) predisposed to interact with the lower surface of the overhanging lip (6) with which each recipient (2) is equipped at its opening:
- at least one "V" support (13), fixed to the frame (9) in median position between two parallel rods (10), whose function is to contact the lower surface of the overhanging lip (6) at the opposite end to the part of the same overhanging lip (6) operated on by the gripping elements (11);
- at least one set of guides (30) with the function of interacting with the external frame (7) of the cover (3) of the press (1) to produce, before the blocking, a pre-established orientation with respect to the axial direction of movement of the parallel rods (10); having also means to produce and transmit said axial movements to said parallel rods (10).

2) Equipment as in claim 1, comprising a plurality of said gripping organs (20) arranged consecutively side-by-side; being envisaged that any two consecutive gripping organs (20) will share one parallel rod (10) whose gripping element (11) presents an exactly symmetrical form with respect to the vertical median plane of the same parallel rod (10), so that it can interact, on both its sides, with two presses (1) acted upon by the two said gripping organs (20) positioned side-by-side.

3) Equipment as in claim 2, wherein said guides (30) with the function of interacting with the external frame (7) of the cover (3) are solidly arranged on the fixed frame (9) to which the parallel rods (10) are slidably mounted and are symmetrically inclined with respect to the vertical median plane of each gripping organ (20).

4) Equipment as in claim 2, wherein each said single gripping element (11) is mushroom-shaped.

5) Equipment as in claim 3, comprising for each said parallel rod (10) a rack and pinion coupling, in which the rack (15) is fixed longitudinally on the parallel rod (10); being foreseen that the cogged pinions (16), meshing with said racks (15), are all solidly mounted to a shaft (17) which is turned in both directions by a motor (18) mounted to the fixed frame (9).

EP 0 424 325 A1

## Fig.1

## Fig.4

5

# Fig.3

# Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 533 540 (KAUFLER)<br>* the whole document *<br>— — — | 1 | A 22 C 17/00<br>B 65 G 47/90 |
| A | FR-A-2 277 025 (CETEC DRESSLER CONSTRUCTIONS)<br>— — — | | |
| A | US-A-3 934 702 (SNYDER)<br>— — — | | |
| A | GB-A-1 279 486 (STRACHAN AND HENSHAW)<br>— — — | | |
| A | EP-A-0 138 653 (KAUFLER)<br>— — — | | |
| A | DE-A-3 006 029 (LANG)<br>— — — | | |
| A | FR-A-2 493 104 (KAUFLER)<br>— — — | | |
| A | FR-A-2 428 980 (GORBATOV)<br>— — — | | |
| A | US-A-4 709 446 (FEAUTO)<br>— — — — — | | |

**TECHNICAL FIELDS SEARCHED (Int. Cl.5)**

A 22 C
B 65 G
B 65 B

The present search report has been drawn up for all claims

| Place of search | Date of completion of search | Examiner |
|---|---|---|
| The Hague | 17 January 91 | DE LAMEILLIEURE D. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

 

& : member of the same patent family, corresponding
document